(19) Europäisches Patentamt / European Patent Office / Office européen des brevets

(11) **EP 4 177 590 A1**

(12) **DEMANDE DE BREVET EUROPEEN**

(43) Date de publication:
**10.05.2023  Bulletin 2023/19**

(21) Numéro de dépôt: **22200996.1**

(22) Date de dépôt: **12.10.2022**

(51) Classification Internationale des Brevets (IPC):
***G01N 1/40*** *(2006.01)*

(52) Classification Coopérative des Brevets (CPC):
**G01N 1/405**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:  **03.11.2021  FR 2111645**

(71) Demandeur: **Commissariat à l'énergie atomique et aux énergies alternatives 75015 Paris (FR)**

(72) Inventeurs:
• **ENEL, Antoine**
  **38054 Grenoble cedex 09 (FR)**
• **BOURLON, Bertrand**
  **38054 Grenoble cedex 09 (FR)**
• **THIEBAUT, Didier**
  **75005 PARIS (FR)**
• **VIAL, Jérôme**
  **75005 PARIS (FR)**

(74) Mandataire: **INNOV-GROUP**
  **310, avenue Berthelot**
  **69372 Lyon Cedex 08 (FR)**

(54) **PROCÉDÉ ET SYSTÈME DE PRÉLÈVEMENT ET DE PRÉPARATION D'UN ÉCHANTILLON GAZEUX**

(57)  L'invention concerne un procédé de prélèvement et de préparation d'un échantillon gazeux à analyser, ledit procédé consistant à réaliser plusieurs fois un cycle qui comporte des étapes de :
- Charge d'un échantillon gazeux dans une unité de préconcentration (U_i) de rang i,
- Transfert dudit échantillon gazeux de l'unité de préconcentration (U_i) de rang i vers l'unité de préconcentration (U_i+1) de l'étage de concentration de rang i+1 par activation des moyens de contrôle fluidique associés à l'étage de concentration de rang i+1.

Fig. 2

EP 4 177 590 A1

## Description

### Domaine technique de l'invention

La présente invention se rapporte à un procédé et système de prélèvement et de préparation d'un échantillon gazeux.

### Etat de la technique

Les composés organiques volatils (appelés couramment COV) sont des composés très étudiés depuis quelques décennies. En effet, ces composés ont des effets à long terme sur la santé, que ce soit par exposition chronique ou répétée à petites doses, et sont produits par la plupart des activités humaines, industrielles en particulier. Ils imprègnent donc l'environnement et il est parfois nécessaire de suivre leur concentration pour estimer les risques sur la santé des personnes exposées. Pour cela, la technique classiquement employée est la chromatographie en phase gazeuse associée à une préconcentration sur adsorbant solide. La concentration sur adsorbant solide utilise un adsorbant, généralement sous forme de poudre, pour piéger les COV par physisorption à température ambiante. L'adsorbant peut ensuite être chauffé pour libérer son contenu en COV, vers un appareil d'analyse comme un chromatographe en phase gaz par exemple.

Les performances de ces solutions sont cependant très vite limitées par un paramètre physico-chimique : le volume de perçage (aussi appelé volume de percée). Cette grandeur quantifie le volume de gaz qu'il est possible de passer à travers un adsorbant avant l'apparition de l'équilibre d'adsorption/désorption pour le composé d'intérêt. Une fois cet équilibre atteint, la quantité totale de molécules d'intérêt piégées est alors constante : de nouvelles molécules peuvent se piéger, mais d'autres molécules se libèrent à la même vitesse.

Il faut noter que le volume de perçage ne doit pas être confondu avec la capacité de l'adsorbant, cette capacité étant le nombre total de sites d'adsorption présents dans l'adsorbant.

Les performances de la concentration sont donc limitées par le volume de perçage. Il est possible de jouer sur les conditions pour augmenter celui-ci (température, quantité d'adsorbant et nature chimique de l'adsorbant principalement) mais l'idéal est de ne pas avoir à changer les conditions de fonctionnement du système.

Le but de l'invention est de proposer une solution permettant le prélèvement et la préparation d'un échantillon gazeux destiné à être analysé, adapté pour obtenir un facteur de concentration final de l'échantillon prélevé qui est plus élevé que les systèmes classiques, sans modifier les conditions de fonctionnement évoquées ci-dessus.

La solution de l'invention permet ainsi d'augmenter le facteur de concentration au-delà de la limite imposée par le volume de perçage sans changer les conditions du système.

### Exposé de l'invention

Ce but est atteint par un procédé de prélèvement et de préparation d'un échantillon gazeux à analyser, ledit procédé étant mis en œuvre dans un système qui comporte :

- Un conduit d'entrée par lequel un gaz est prélevé,
- Un nombre N d'étages de concentration, chaque étage ayant un rang i, avec i allant de 1 à N et N au moins égal à 2,
- Chaque étage de concentration comprenant un chemin fluidique portant une unité de préconcentration et des moyens de contrôle fluidique associés, commandés pour déplacer un flux gazeux le long de son chemin fluidique et le faire circuler à travers l'unité de préconcentration,
- Le chemin fluidique portant l'unité de préconcentration de l'étage de concentration de rang 1 étant relié audit conduit d'entrée,
- Le chemin fluidique de chaque étage de concentration de rang i+1 étant connecté au chemin fluidique de l'étage de rang i de manière à former un chemin fluidique séparé de celui-ci,
- Une unité de commande des moyens de contrôle fluidique de chaque étage de concentration,

Ledit procédé consistant à réaliser plusieurs fois un premier cycle qui comporte des étapes de :

- Charge d'un échantillon gazeux dans l'unité de préconcentration à travers le chemin fluidique de l'étage de rang i par activation des moyens de contrôle fluidique associés à l'étage de rang i,
- Transfert dudit échantillon gazeux de l'unité de préconcentration de rang i vers l'unité de préconcentration, à travers le chemin fluidique de l'étage de concentration de rang i+1 par activation des moyens de contrôle fluidique associés à l'étage de concentration de rang i+1.

Selon une particularité, le procédé comporte un deuxième cycle comportant ledit premier cycle et une deuxième étape de transfert de l'échantillon gazeux présent dans l'unité de préconcentration de l'étage de concentration de rang i+1 vers l'unité de préconcentration de l'étage de concentration de rang i+2, ce deuxième cycle étant réalisé une ou plusieurs fois, tant que la concentration de l'échantillon gazeux piégé dans l'unité de concentration de l'étage de concentration de rang i+2 n'a pas atteint un niveau déterminé.

Selon une autre particularité, le niveau déterminé de la concentration correspond au volume de perçage de l'adsorbant de l'unité de préconcentration.

Selon une autre particularité, le procédé comporte une étape de transfert de l'échantillon gazeux piégé dans l'unité de préconcentration de rang N vers un détecteur pour analyse. Selon une autre particularité, le procédé comporte une étape initiale de prélèvement de l'échantillon gazeux dans l'unité de préconcentration de l'étage de rang de concentration de rang 1, à travers le conduit d'entrée.

Selon une autre particularité, chaque étape de transfert est mise en œuvre par chauffage de l'unité de concentration de l'étage de concentration de rang i à une température suffisante pour désorber ledit échantillon gazeux en vue de le transférer vers l'unité de concentration de l'étage de concentration de rang i+1.

L'invention concerne également un système de prélèvement et de préparation d'un échantillon gazeux à analyser, apte à mettre en œuvre le procédé tel que défini ci-dessus, ledit système comportant :

- Un conduit d'entrée par lequel un gaz est prélevé,
- Un nombre N d'étages de concentration, chaque étage ayant un rang i, avec i allant de 1 à N et N au moins égal à 2,
- Chaque étage de concentration comprenant un chemin fluidique portant une unité de préconcentration et des moyens de contrôle fluidique associés, commandés pour déplacer un flux gazeux le long de son chemin fluidique et le faire circuler à travers l'unité de préconcentration,
- Le chemin fluidique portant l'unité de préconcentration de l'étage de concentration de rang 1 étant relié audit conduit d'entrée,
- Le chemin fluidique de chaque étage de concentration de rang i+1 étant connecté sur le chemin fluidique de manière à former un chemin fluidique séparé,
- Une unité de commande des moyens de contrôle fluidique de chaque étage de concentration,

L'unité de commande étant configurée pour commander :

- Une charge d'un échantillon gazeux dans l'unité de préconcentration de l'étage de rang i par activation des moyens de contrôle fluidique associés à l'étage de rang i,
- Un transfert dudit échantillon gazeux de l'unité de préconcentration de rang i vers l'unité de préconcentration de l'étage de concentration de rang i+1 par activation des moyens de contrôle fluidique associés à l'étage de concentration de rang i+1.

Selon une particularité, l'unité de commande est configurée pour commander un deuxième cycle comportant ledit premier cycle et une deuxième étape de transfert de l'échantillon gazeux présent dans l'unité de préconcentration de l'étage de concentration de rang i+1 vers l'unité de préconcentration de l'étage de concentration de rang i+2, ce deuxième cycle étant réalisé une ou plusieurs fois, tant que la concentration de l'échantillon gazeux piégé dans l'unité de concentration de l'étage de concentration de rang i+2 n'a pas atteint un niveau déterminé.

Selon une autre particularité, le niveau déterminé de la concentration correspond à la capacité d'adsorption de l'unité de préconcentration.

Selon une autre particularité, l'unité de commande est configurée pour commander un transfert de l'échantillon gazeux piégé dans l'unité de préconcentration de rang N vers un détecteur pour analyse.

Selon une autre particularité, l'unité de commande est configurée pour commander un prélèvement de l'échantillon gazeux dans l'unité de préconcentration de l'étage de concentration de rang 1, à travers le conduit d'entrée.

Selon une autre particularité, pour chaque transfert, l'unité de commande est configurée pour commander un chauffage de l'unité de concentration de l'étage de concentration de rang i à une température suffisante pour désorber ledit échantillon gazeux en vue de le transférer vers l'unité de concentration de l'étage de concentration de rang i+1.

**Brève description des figures**

D'autres caractéristiques et avantages vont apparaître dans la description détaillée qui suit faite en regard des dessins annexés dans lesquels :

- La figure 1 illustre de manière schématique l'architecture d'une unité de préconcentration ;
- La figure 2 représente le système de prélèvement et de préparation conforme à l'invention ;
- Les figures 3A à 3C illustrent les étapes du procédé de prélèvement et de préparation conforme à l'invention ;
- La figure 4 représente un diagramme illustrant le principe de fonctionnement du procédé de l'invention ;
- La figure 5 représente un mode de réalisation avantageux du système de l'invention ;
- La figure 6 représente un diagramme illustrant le principe de fonctionnement du procédé de l'invention, mis en œuvre par le système de la figure 5 ;
- La figure 7 représente un diagramme illustrant le principe de l'invention ;

**Description détaillée d'au moins un mode de réalisation**

Le procédé de l'invention peut être mis en œuvre sur un même composant fluidique, portant plusieurs unités de préconcentration arrangées de manière adaptée pour la mise en œuvre du procédé. Plusieurs arrangements seront décrits ci-dessous.

Une unité de préconcentration U_X (X pouvant aller de 1 à N - voir ci-après) permet d'accumuler, à l'aide d'un adsorbant, des composants présents dans un flux gazeux entrant et permet de libérer partiellement ou totalement le flux gazeux, par désorption thermique.

Chaque unité de préconcentration du réseau peut se présenter sous la forme d'un microcomposant en silicium. D'autre solutions pourraient être imaginées.

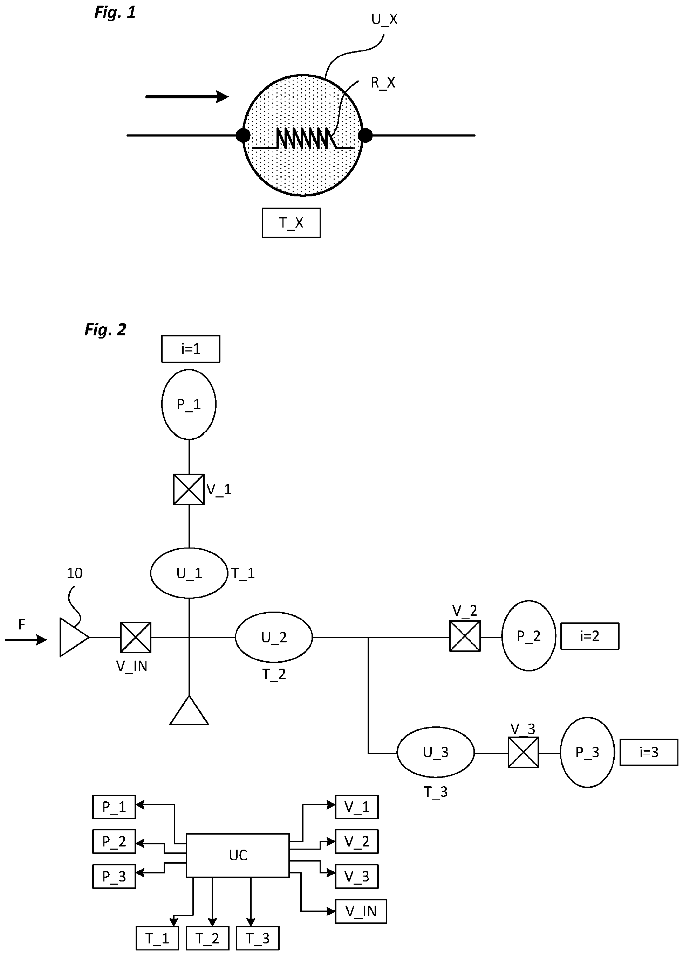

En référence à la figure 1, chaque unité de préconcentration U_X du réseau comporte un boîtier présentant au moins une cavité dans laquelle est placé le matériau adsorbant. Dans sa cavité, chaque unité de préconcentration peut comporter une microstructure (par exemple des micro-piliers) recouverte d'un matériau adsorbant.

Le matériau adsorbant peut être réalisé sous la forme de particules de Tenax (marque déposée) ou de tout autre matériau utilisé classiquement.

Chaque unité de préconcentration U_X est dotée de moyens de chauffage appliqués sur son boîtier. Les moyens de chauffage peuvent être réalisés sous la forme d'une résistance chauffante R_X dont la température T_X peut être facilement ajustée. Un capteur de température (par exemple sous la forme d'une résistance de mesure) peut également être présent. Selon la température qui est réglée au niveau d'une unité de préconcentration et le type d'adsorbant qui est employé dans cette unité, il est possible de contrôler le flux gazeux et ainsi de gérer quels sont les composés présents dans le flux gazeux qui seront fixés ou relargués au niveau de l'unité de l'unité de préconcentration contrôlé. Des tables permettent en effet d'indiquer les composés qui seront fixés ou relargués par une unité de préconcentration en fonction de la nature de l'adsorbant utilisé ainsi que de la température fixée au niveau de l'unité.

Une unité de préconcentration U_X peut par exemple prendre trois états en fonction de la température qui lui est affectée :

- Un état dit fermé, obtenu à une première température, dite froide. Dans cet état, les composés du flux gazeux entrant sont tous piégés dans la cavité de l'unité et aucun flux gazeux ne ressort de la cavité.
- Un état dit intermédiaire, obtenu à une deuxième température, ayant une valeur plus élevée que celle de la première température. Dans cet état intermédiaire, certains composés du flux gazeux entrant sont piégés dans la cavité et d'autres composés du flux gazeux sont libérés par désorption thermique. Selon la valeur prise par cette deuxième température, les composés piégés ou libérés pourront différer.
- Un état dit ouvert, obtenu à une troisième température dont la valeur est plus élevée que celle de la deuxième température. Dans cet état, la totalité du flux gazeux entrant est libéré.

Bien entendu, le choix des températures de fonctionnement pourra différer en fonction du matériau adsorbant qui est employé dans l'unité et des composés qui sont présents dans le flux gazeux et que l'on souhaite contrôler, c'est-à-dire piéger et/ou libérer. Dans le système de l'invention, les unités de préconcentration choisies sont par exemple toutes identiques (notamment au niveau matériau de l'adsorbant, température de désorption, taille).

De manière non limitative, on a par exemple les données suivantes :

- Taille d'une unité de préconcentration réalisée sous forme d'un composant silicium : 10mm×10mm, silicium, 2 entrées et 2 sorties ;
- Taille des cavités fluidiques : 1µL à 100 µL ;
- Adsorbant employé de type commerciaux (marques déposées) : Tenax TA, Tenax GR, Carbostrap, Carbostrap C, Carboxen 569 ,Carbosieve SIII,...
- Températures utilisées typiques allant de 0 à 300 °C ;

En référence à la figure 2, le système de l'invention comporte un réseau fluidique comprenant plusieurs étages de concentration reliés entre eux de manière adaptée pour augmenter le facteur de concentration en échantillon gazeux dans le système.

Chaque étage de concentration est défini avec un rang i, avec i pouvant aller de 1 à N et N supérieur ou égal à 2.

Chaque étage de concentration comporte un chemin fluidique portant au moins une unité de préconcentration disposant de l'architecture décrite ci-dessus.

Chaque étage de concentration comporte avantageusement des moyens de contrôle fluidique agencés sur le chemin fluidique de l'étage de concentration pour contrôler les déplacements de gaz sur le chemin. De manière non limitative, ces moyens de contrôle fluidique peuvent comporter une ou plusieurs vannes contrôlables, une ou plusieurs pompes fonctionnant en pression ou dépression, un ou plusieurs réservoirs de gaz inerte ou équivalents permettant par exemple de pousser le flux gazeux.

Par chemin fluidique, on entend qu'il s'agit d'une unique branche ou conduit comportant une seule entrée fluidique et une seule sortie fluidique.

Le système comporte une unité de commande UC chargée notamment de contrôler les moyens de contrôle fluidique, ainsi que les moyens de chauffage propres à chaque unité de préconcentration des étages de concentration, en vue de contrôler de déplacement des flux gazeux dans les chemins fluidiques du réseau.

Un système simplifié à trois étages de concentration (N=3) est représenté sur la figure 2.

Ce système comporte un conduit d'entrée 10 par lequel le gaz à analyser est prélevé. Une vanne V_IN est par exemple agencée sur ce conduit d'entrée 10 pour contrôler l'injection d'un flux gazeux F à travers le conduit d'entrée.

Le système comporte un premier étage de concentration (i=1) doté d'un premier chemin fluidique portant 'une première unité de concentration U_1, ce premier chemin fluidique étant relié au conduit d'entrée 10.

Une vanne V_1 et une pompe P_1 sont agencées sur ce premier chemin fluidique pour contrôler l'injection du flux gazeux F à travers la première unité de préconcentration U_1.

Le système comporte un deuxième étage de concentration (i=2) doté d'un deuxième chemin fluidique portant une deuxième unité de préconcentration U_2, ce deuxième chemin fluidique étant relié au premier chemin fluidique, de manière à former un chemin fluidique parallèle au premier chemin fluidique.

Une vanne V_2 et une pompe P_2 est agencée sur le réseau pour contrôler l'injection d'un flux gazeux à travers le deuxième chemin fluidique et sa deuxième unité de préconcentration U_2.

Selon l'état des vannes V_1 et V_2, le flux gazeux entrant par le conduit d'entrée 10 dispose de deux chemins fluidiques distincts, le premier chemin fluidique menant à la première unité de préconcentration U_1 et le deuxième chemin fluidique menant à la deuxième unité de préconcentration U_2.

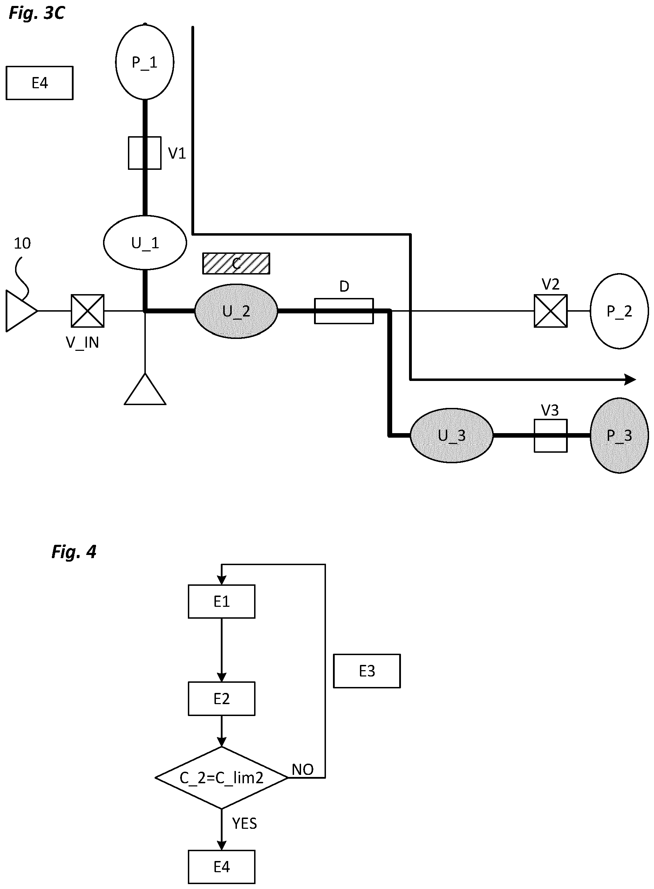

Le système peut comporter un détecteur D, relié en série à la deuxième unité de préconcentration U_2, en aval de celle-ci (voir figure 3C).

Le détecteur D utilisé est par exemple un micro-détecteur à conductivité thermique (appelé couramment TCD). Un troisième chemin fluidique portant une troisième unité de préconcentration U_3 peut être connecté sur le deuxième chemin fluidique, en aval du détecteur pour former un chemin parallèle destiné à récupérer l'échantillon après analyse.

Il faut noter que chaque pompe est avantageusement munie d'un clapet anti-retour, pour éventuellement créer une entrée d'air nécessaire à un équilibrage des pressions dans le réseau.

Il faut noter que les valeurs limites de concentration C_lim1, C_lim2, C_lim3, C_limN qui seront évoquées ci-dessous peuvent être mesurées au niveau de chaque unité de préconcentration U_X du système, mais aussi correspondre à un nombre de cycles d'adsorption dans l'unité de préconcentration déterminé et programmé à l'avance. Chaque valeur limite peut notamment être choisie de manière arbitraire, ou correspondre à la capacité maximale d'adsorption du matériau adsorbant.

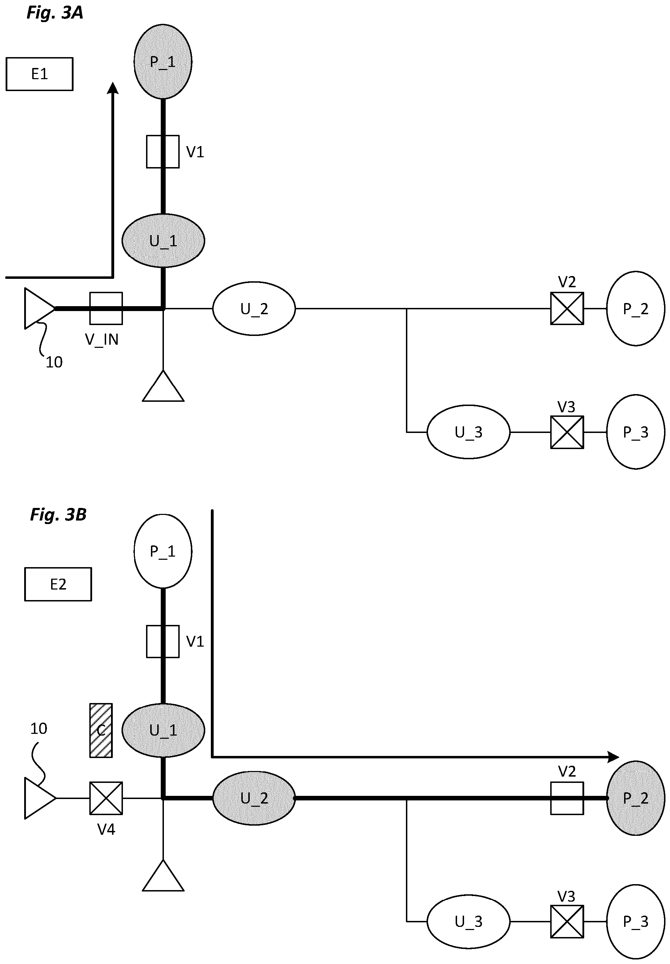

Partant de cette architecture de base, en référence aux figures 3A à 3C et à la figure 4, le procédé de l'invention présente les étapes suivantes :

- E1 - Figure 3A : Ouverture de la vanne V_IN et de la vanne V_1 et activation de la pompe P_1. Un premier échantillon gazeux est prélevé à travers le conduit d'entrée 10 et envoyé directement dans la première unité de préconcentration U_1 via le premier chemin fluidique.
- E2 - Figure 3B : On commande une ouverture de la vanne V_1 pour disposer d'une entrée d'air à travers la pompe P1, une ouverture de la vanne V_2, une activation de la pompe P_2 et un chauffage (C) de la première unité de préconcentration U_1 pour désorber l'échantillon. On obtient un transfert du premier échantillon gazeux de la première unité de préconcentration U_1 vers la deuxième unité de préconcentration U_2 située sur le deuxième chemin fluidique.

- E3 (voir figure 4) : Le cycle comportant les étapes E1 et E2 est répété plusieurs fois successivement (au moins une fois pour faire au total au moins deux cycles) avec, à chaque cycle, un nouvel échantillon gazeux prélevé via le conduit d'entrée 10 (branche NO sur la figure 4). A chaque nouveau cycle, on augmente la concentration en échantillon prélevé dans la deuxième unité de préconcentration U_2.

- E4 - Figure 3C : Une fois l'échantillon suffisamment concentré ou à la concentration souhaitée (C_2=C_lim2) dans la deuxième unité de préconcentration U_2, il peut être envoyé pour analyse dans un détecteur D inséré dans le réseau. Pour ce transfert, on commande l'ouverture de la vanne V_1 pour avoir une entrée d'air au niveau de la pompe P1, l'ouverture de la vanne V_3, une activation de la pompe P_3 et un chauffage (C) de la deuxième unité de préconcentration U_2 pour désorber l'échantillon collecté sur cette unité et l'envoyer à travers le détecteur D (branche YES sur la figure 4).

Il faut noter que ce système permet, en utilisant au moins deux unités de préconcentration U_1, U_2 en parallèle, c'est-à-dire présentes sur des chemins fluidiques séparés, de découpler le volume de perçage de l'efficacité de la concentration. Le facteur limitant devient ainsi plutôt la capacité de l'adsorbant de la deuxième unité de préconcentration U_2. Chaque valeur limite peut correspondre à la capacité de l'adsorbant.

Il faut noter que l'invention peut s'appliquer à un seul cycle, incluant les étapes E1 et E2. Cependant on comprend que l'invention présente un avantage particulier lorsque l'on effectue au moins deux cycles.

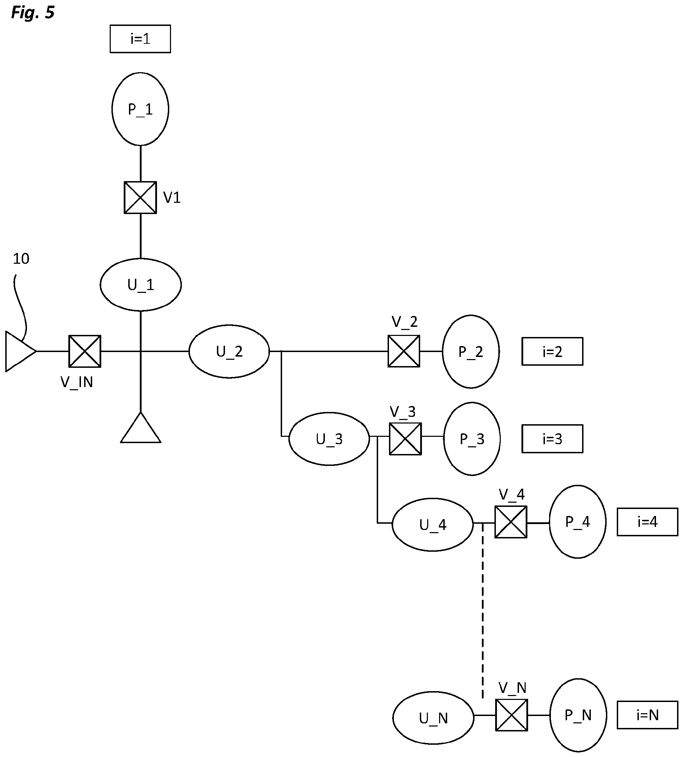

Sur les figures 3A à 3C, le système est composé de deux étages de préconcentration. Selon un aspect particulier de l'invention, il est possible de dupliquer le motif décrit ci-dessus pour augmenter le nombre d'étages de préconcentration. La figure 5 montre ainsi un système doté de N étages de concentration. Le chemin fluidique de chaque nouvel étage de concentration est connecté sur le chemin fluidique de l'étage de concentration situé en amont, de manière à former un chemin fluidique séparé parallèle, permettant une décharge de l'échantillon.

Le chemin fluidique de l'étage de concentration de rang i+1 est connecté sur le chemin fluidique de rang i, en aval de l'unité de préconcentration de rang i, dans le sens de déplacement du flux gazeux de l'unité de préconcentration de rang i vers celle de l'unité de préconcentration de rang i+1.

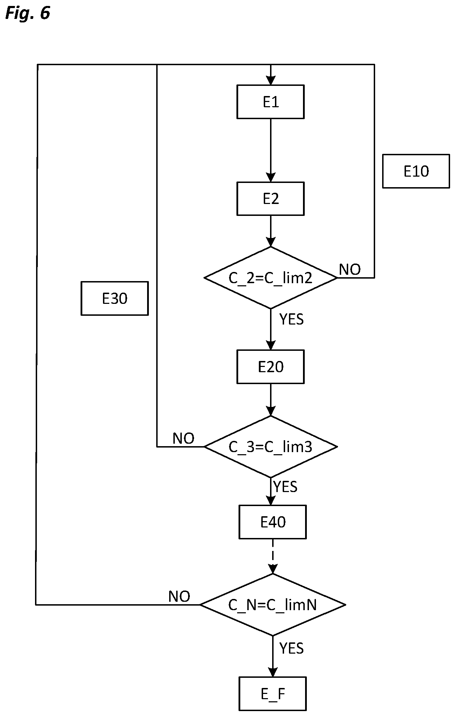

En liaison avec la figure 5 et avec la figure 6, le principe de fonctionnement de ce système à N étages de concentration est le suivant :

- L'étape E10, comprenant les étapes E1 à E3 décrites ci-dessus, reste inchangée. On peut ainsi effectuer plusieurs prélèvements successifs et on augmente la concentration en échantillon dans la deuxième unité de préconcentration U_2.
- E20 : Ouverture de la vanne V_1 et de la vanne V_3, activation de la pompe P3 et chauffage de la deuxième unité de préconcentration U_2. On obtient un transfert de l'échantillon de la deuxième unité de préconcentration U_2 vers une troisième unité de préconcentration U_3 à travers le troisième chemin fluidique.
- E30: Ce nouveau cycle comportant l'étape E10 et l'étape E20 peut être répété autant de fois que souhaité (branche NO sur la figure 6), jusqu'à obtenir une concentration C_3 ciblée dans la troisième unité de préconcentration U_3 (C_3=C_lim3), pouvant tenir compte par exemple des capacités d'adsorption de la troisième unité de préconcentration U_3 ou d'un nombre de cycles prédéterminé.
- E40 : Lorsque la concentration C_3 d'échantillon dans la troisième unité de préconcentration U_3 atteint la valeur souhaitée, C_lim3, ou après un nombre de cycles déterminé, l'échantillon est transféré vers la quatrième unité de préconcentration U_4 à travers le quatrième chemin fluidique.
- Ce principe peut être dupliqué pour chaque nouvel étage de concentration de rang i, jusqu'à N étages de concentration, de sorte que l'on obtient au final un transfert vers la dernière unité de préconcentration U_N du système. Pour l'étage N : Par activation de la pompe P_N, on transfère l'échantillon gazeux de l'unité de préconcentration U_N-1 vers l'unité de préconcentration U_N.
- E_F : L'échantillon concentré dans la dernière unité de préconcentration U_N peut ensuite être envoyé vers le détecteur D, pour analyse (branche YES).

Comme évoqué précédemment, pour chaque étage de concentration, de manière non limitative, on pourra avantageusement faire au moins deux cycles de remplissage de l'unité de préconcentration de l'étage considéré.

Par ailleurs, à chaque nouveau prélèvement le volume d'échantillon gazeux capté peut bien entendu être différent. Il en est de même pour chaque transfert d'échantillon d'un étage de concentration à un autre.

Le procédé de l'invention fonctionne à l'aide de plusieurs paramètres clés :

1) La séparation des chemins fluidiques entre le chemin de prélèvement (V_4-U_1-V_1-P_1) et le chemin de transfert (V_1-P_1-U_1-U_2-V_2-P_2). En particulier, lors du prélèvement, il ne doit pas y avoir de mouvement de gaz sur la deuxième unité de préconcentration U_2. De même, pour un système à trois étages, l'échantillon est accumulé au final sur la troisième unité de préconcentration U_3. Lors des cycles incluant chacun l'étape de prélèvement vers la première unité de préconcentration U_1 et le transfert vers la deuxième unité de préconcentration U_2, il ne doit donc pas y avoir de mouvement de gaz vers la troisième unité de préconcentration U_3 pour ne pas libérer l'échantillon piégé.

2) Un rapport le plus élevé possible entre le volume de gaz prélevé et le volume de gaz déplacé pendant les étapes de transfert. En particulier, le volume de prélèvement est souhaité être le plus élevé possible (pour capter le maximum d'échantillon) et le volume de transfert le plus petit possible (pour perturber le moins possible l'échantillon déjà accumulé dans la deuxième unité de préconcentration)

Le principe de l'invention peut être modélisé de la manière suivante :

- La première unité de préconcentration U_1 a un volume de perçage $V_1$ ;
- La deuxième unité de préconcentration U_2 a un volume de perçage V2 ;
- On note $v_{1-2}$ le volume de gaz déplacé pendant les étapes de transfert entre la première unité de préconcentration U_1 et la deuxième unité de préconcentration U_2 ;
- Le volume de gaz prélevé efficacement en mode classique (avec une seule unité de préconcentration) serait $V_1$.
- Le volume de gaz prélevé efficacement à l'aide du principe de l'invention est

$$\frac{V_2}{v_{1-2}} * V_1$$

- Le gain du principe de l'invention par rapport au mode classique est alors

$$\frac{V_2}{v_{1-2}} ;$$

- Le nombre d'étapes de transfert possibles lors d'une étape est limitée par ce même rapport. En effet, à chaque étape de transfert, c'est le volume $v_{1-2}$ qui est déplacé. Un nombre M étapes de transfert donne donc un volume déplacé total de $M * v_{1-2}$. Ce volume doit être inférieur à V2, sous peine de perdre une partie de l'échantillon accumulé sur la deuxième unité de préconcentration U_2. Le nombre d'étapes de transfert maximum est donc

$$M_{1-2} = \frac{V_2}{v_{1-2}}$$

- Avec un système ayant N étages de préconcentration, le gain serait donc :

$$\prod_{k=2}^{N} \frac{V_k}{v_{(k-1)-k}}$$

En considérant que :

- Il n'y a pas de pertes au cours des transferts entre les unités de préconcentration ;
- La capacité des unités de préconcentration n'est pas atteinte. En particulier celle de la dernière unité de préconcentration (U_N), qui va accumuler le plus d'échantillon ;
- En particulier, en considérant un système avec N étages de préconcentration identiques, ayant le même volume de perçage V, un même volume de transfert $v$ à toutes les étapes, on obtient un gain total de

$$\left(\frac{V}{v}\right)^{N-1}$$

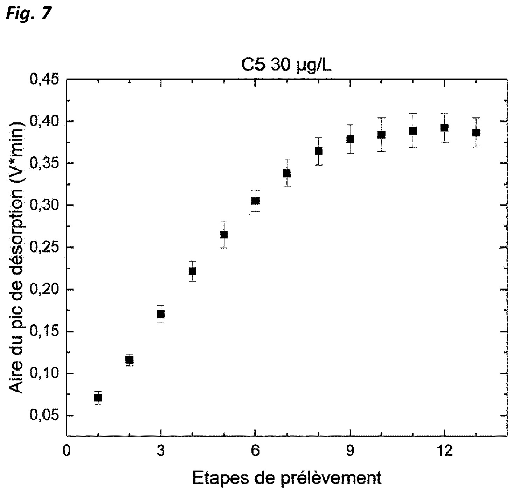

Le procédé de l'invention a été expérimenté pour validation. La figure 7 montre ainsi un diagramme illustrant la variation de la concentration en échantillon gazeux au niveau de la deuxième unité de préconcentration, à chaque nouveau prélèvement. On constate que la concentration augmente jusqu'à un palier, correspondant à la saturation du matériau adsorbant de la deuxième unité de préconcentration U_2.

Tout en restant dans le cadre de l'invention, il faut comprendre que le système peut présenter quelques variantes de réalisation, parmi lesquelles :

- Système utilisant des unités de préconcentration non identiques, que ce soit au niveau de la quantité d'adsorbant contenue, de la taille, de la nature de chimique de l'adsorbant,
- Système utilisant des unités de préconcentration autres que les composants silicium (tube TD, tube en verre, tube métallique, tout type de cavité remplie d'adsorbant avec au moins une entrée et une sortie fluidique...),
- Système utilisant d'autre moyens que les pompes pour déplacer les gaz dans le système (exemple : bouteille sous pression...).

Il faut noter que l'invention peut être utilisée de trois façons principales :

- Pour augmenter le facteur de concentration d'un système d'analyse de gaz,
- Pour analyser des composés qui sont habituellement difficiles à piéger,

- Pour augmenter la limite de détection et gagner en précision.

De par son caractère miniature et relativement simple (au minimum deux unités de préconcentration+ deux vannes + deux pompes) le système peur être facilement intégré en amont de capteurs ou systèmes d'analyse miniatures existants.

## Revendications

1. Procédé de prélèvement et de préparation d'un échantillon gazeux à analyser, ledit procédé étant mis en œuvre dans un système qui comporte :

   - Un conduit d'entrée (10) par lequel un gaz est prélevé,
   - Un nombre N d'étages de concentration, chaque étage ayant un rang i, avec i allant de 1 à N et N au moins égal à 2,
   - Chaque étage de concentration comprenant un chemin fluidique portant une unité de préconcentration et des moyens de contrôle fluidique associés, commandés pour déplacer un flux gazeux le long de son chemin fluidique et le faire circuler à travers l'unité de préconcentration,
   - Le chemin fluidique portant l'unité de préconcentration (U_1) de l'étage de concentration de rang 1 étant relié audit conduit d'entrée,
   - Le chemin fluidique de chaque étage de concentration de rang i+1 étant connecté au chemin fluidique de l'étage de rang i de manière à former un chemin fluidique séparé de celui-ci,
   - Une unité de commande (UC) des moyens de contrôle fluidique de chaque étage de concentration,

   Ledit procédé étant **caractérisé en ce qu'**il consiste à réaliser plusieurs fois un premier cycle qui comporte des étapes de :

   - Charge d'un échantillon gazeux dans l'unité de préconcentration (U_i) à travers le chemin fluidique de l'étage de rang i par activation des moyens de contrôle fluidique associés à l'étage de rang i,
   - Transfert dudit échantillon gazeux de l'unité de préconcentration (U_i) de rang i vers l'unité de préconcentration (U_i+1), à travers le chemin fluidique de l'étage de concentration de rang i+1 par activation des moyens de contrôle fluidique associés à l'étage de concentration de rang i+1.

2. Procédé selon la revendication 1, **caractérisé en ce qu'**il comporte un deuxième cycle comportant ledit premier cycle et une deuxième étape de transfert de l'échantillon gazeux présent dans l'unité de préconcentration de l'étage de concentration de rang i+1 vers l'unité de préconcentration (U_i+2) de l'étage de concentration de rang i+2, ce deuxième cycle étant réalisé une ou plusieurs fois, tant que la concentration de l'échantillon gazeux piégé dans l'unité de concentration (U_i+2) de l'étage de concentration de rang i+2 n'a pas atteint un niveau déterminé.

**3.** Procédé selon la revendication 2, **caractérisé en ce que** le niveau déterminé de la concentration correspond à la capacité d'adsorption de l'unité de préconcentration.

**4.** Procédé selon l'une des revendications 1 à 3, **caractérisé en ce qu'**il comporte une étape de transfert de l'échantillon gazeux piégé dans l'unité de préconcentration (U_N) de rang N vers un détecteur (D) pour analyse.

**5.** Procédé selon l'une des revendications 1 à 4, **caractérisé en ce qu'**il comporte une étape initiale de prélèvement de l'échantillon gazeux dans l'unité de préconcentration (U_1) de l'étage de rang de concentration de rang 1, à travers le conduit d'entrée (10).

**6.** Procédé selon l'une des revendications 1 à 5, **caractérisé en ce que** chaque étape de transfert est mise en œuvre par chauffage de l'unité de concentration de l'étage de concentration de rang i à une température suffisante pour désorber ledit échantillon gazeux en vue de le transférer vers l'unité de concentration de l'étage de concentration de rang i+1.

**7.** Système de prélèvement et de préparation d'un échantillon gazeux à analyser, apte à mettre en œuvre le procédé tel que défini dans l'une des revendications 1 à 6, ledit système comportant :

- Un conduit d'entrée (10) par lequel un gaz est prélevé,
- Un nombre N d'étages de concentration, chaque étage ayant un rang i, avec i allant de 1 à N et N au moins égal à 2,
- Chaque étage de concentration comprenant un chemin fluidique portant une unité de préconcentration et des moyens de contrôle fluidique associés, commandés pour déplacer un flux gazeux le long de son chemin fluidique et le faire circuler à travers l'unité de préconcentration,
- Le chemin fluidique portant l'unité de préconcentration (U_1) de l'étage de concentration de rang 1 étant relié audit conduit d'entrée,
- Le chemin fluidique de chaque étage de concentration de rang i+1 étant connecté sur le chemin fluidique de manière à former un chemin fluidique séparé,

- Une unité de commande (UC) des moyens de contrôle fluidique de chaque étage de concentration,

Ledit système étant **caractérisé en ce que** l'unité de commande (UC) est configurée pour commander :

- Une charge d'un échantillon gazeux dans l'unité de préconcentration (U_i) de l'étage de rang i par activation des moyens de contrôle fluidique associés à l'étage de rang i,
- Un transfert dudit échantillon gazeux de l'unité de préconcentration (U_i) de rang i vers l'unité de préconcentration (U_i+1) de l'étage de concentration de rang i+1 par activation des moyens de contrôle fluidique associés à l'étage de concentration de rang i+1.

**8.** Système selon la revendication 7, **caractérisé en ce que** l'unité de commande est configurée pour commander un deuxième cycle comportant ledit premier cycle et une deuxième étape de transfert de l'échantillon gazeux présent dans l'unité de préconcentration de l'étage de concentration de rang i+1 vers l'unité de préconcentration (U_i+2) de l'étage de concentration de rang i+2, ce deuxième cycle étant réalisé une ou plusieurs fois, tant que la concentration de l'échantillon gazeux piégé dans l'unité de concentration (U_i+2) de l'étage de concentration de rang i+2 n'a pas atteint un niveau déterminé.

**9.** Système selon la revendication 8, **caractérisé en ce que** le niveau déterminé de la concentration correspond au volume de perçage de l'adsorbant de l'unité de préconcentration.

**10.** Système selon l'une des revendications 7 à 9, **caractérisé en ce que** l'unité de commande (UC) est configurée pour commander un transfert de l'échantillon gazeux piégé dans l'unité de préconcentration (U_N) de rang N vers un détecteur (D) pour analyse.

**11.** Système selon l'une des revendications 7 à 10, **caractérisé en ce que** l'unité de commande (UC) est configurée pour commander un prélèvement de l'échantillon gazeux dans l'unité de préconcentration (U_1) de l'étage de concentration de rang 1, à travers le conduit d'entrée (10).

**12.** Système selon l'une des revendications 7 à 11, **caractérisé en ce que**, pour chaque transfert, l'unité de commande est configurée pour commander un chauffage de l'unité de concentration de l'étage de concentration de rang i à une température suffisante pour désorber ledit échantillon gazeux en vue de le transférer vers l'unité de concentration de l'étage de concentration de rang i+1.

**Fig. 1**

U_X

R_X

T_X

**Fig. 2**

i=1

P_1

V_1

U_1    T_1

10

F

V_IN

U_2

T_2

V_2

P_2

i=2

V_3

U_3

P_3

i=3

T_3

P_1

P_2

P_3

UC

V_1

V_2

V_3

V_IN

T_1   T_2   T_3

**Fig. 3A**

E1

P_1

V1

U_1

V_IN

10

U_2

V2

P_2

U_3

V3

P_3

**Fig. 3B**

P_1

E2

V1

10

C

U_1

V4

U_2

V2

P_2

U_3

V3

P_3

*Fig. 3C*

E4

P_1

V1

10

U_1

V_IN

C

U_2

D

V2

P_2

U_3

V3

P_3

*Fig. 4*

E1

E2

E3

C_2=C_lim2

NO

YES

E4

Fig. 5

*Fig. 6*

**Fig. 7**

C5 30 µg/L

| Europäisches Patentamt European Patent Office Office européen des brevets | **RAPPORT DE RECHERCHE EUROPEENNE** | Numéro de la demande EP 22 20 0996 |
|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2009/090197 A1 (FINLAY ALAN [GB] ET AL) 9 avril 2009 (2009-04-09) * alinéas [0008], [0010], [0025], [0028] – [0029], [0034], [0070] – [0073], [0078]; figures 10,11,14 * ----- | 1-12 | INV. G01N1/40 |
| X | US 5 109 691 A (CORRIGAN COLIN D [CA] ET AL) 5 mai 1992 (1992-05-05) * colonne 13, ligne 43 – colonne 15, ligne 58; figures 7, 8, 10 * ----- | 1-12 | |

DOMAINES TECHNIQUES RECHERCHES (IPC)

G01N

Le présent rapport a été établi pour toutes les revendications

| Lieu de la recherche | Date d'achèvement de la recherche | Examinateur |
|---|---|---|
| La Haye | 17 mars 2023 | Giráldez Sánchez, J |

## ANNEXE AU RAPPORT DE RECHERCHE EUROPEENNE
## RELATIF A LA DEMANDE DE BREVET EUROPEEN NO.

EP 22 20 0996

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-2023

| Document brevet cité au rapport de recherche | Date de publication | Membre(s) de la famille de brevet(s) | | Date de publication |
|---|---|---|---|---|
| US 2009090197 A1 | 09-04-2009 | EP | 2045593 A2 | 08-04-2009 |
| | | GB | 2453531 A | 15-04-2009 |
| | | US | 2009090197 A1 | 09-04-2009 |
| US 5109691 A | 05-05-1992 | AT | 182406 T | 15-08-1999 |
| | | AU | 647767 B2 | 31-03-1994 |
| | | AU | 661943 B2 | 10-08-1995 |
| | | CA | 2070648 A1 | 09-06-1991 |
| | | CA | 2229011 A1 | 09-06-1991 |
| | | DE | 69033217 T2 | 09-12-1999 |
| | | DK | 0502998 T3 | 31-01-2000 |
| | | EP | 0502998 A1 | 16-09-1992 |
| | | EP | 0881479 A2 | 02-12-1998 |
| | | EP | 0881480 A2 | 02-12-1998 |
| | | EP | 0881482 A2 | 02-12-1998 |
| | | EP | 0905501 A2 | 31-03-1999 |
| | | ES | 2134192 T3 | 01-10-1999 |
| | | IL | 96605 A | 21-10-1994 |
| | | JP | 2814304 B2 | 22-10-1998 |
| | | JP | 3032960 B2 | 17-04-2000 |
| | | JP | 3097046 B2 | 10-10-2000 |
| | | JP | 3097047 B2 | 10-10-2000 |
| | | JP | H05506303 A | 16-09-1993 |
| | | JP | H09126964 A | 16-05-1997 |
| | | JP | H09126965 A | 16-05-1997 |
| | | JP | H09126966 A | 16-05-1997 |
| | | KR | 0171421 B1 | 01-05-1999 |
| | | US | 5109691 A | 05-05-1992 |
| | | WO | 9109307 A1 | 27-06-1991 |

EPO FORM P0460

Pour tout renseignement concernant cette annexe : voir Journal Officiel de l'Office européen des brevets, No.12/82